# FASCICULE DE BREVET EUROPEEN

(11) **EP 3 189 688 B1**
(45) Date de publication et mention de la délivrance du brevet: **19.02.2020**
(21) Numéro de dépôt: 15760140.2
(22) Date de dépôt: 02.09.2015
(51) Int. Cl.: H04W 36/00, H04L 29/12, H04W 8/08, H04W 84/10

(54) **PROCEDE POUR AMELIORER LA PROCEDURE DE TRANSFERT D'UN UTILISATEUR MOBILE DANS UN RESEAU DE COMMUNICATIONS**
VERFAHREN ZUR VERBESSERUNG DES VERFAHRENS ZUR ÜBERTRAGUNG EINES MOBILEN NUTZERS IN EINEM KOMMUNIKATIONSNETZWERK
METHOD FOR IMPROVING THE PROCEDURE FOR TRANSFERRING A MOBILE USER IN A COMMUNICATIONS NETWORK

(30) Priorité: 03.09.2014 FR 1401962
(43) Date de publication de la demande: 12.07.2017
(73) Titulaire: Thales, 92400 Courbevoie (FR)
(72) Inventeur: MATHIEU, Christophe, F-78141 Velizy Cedex (FR); MARTINEZ, Natael, F-78141 Velizy Cedex (FR); KLECH, Guillaume, F-78141 Velizy Cedex (FR)
(74) Mandataire: Dudouit, Isabelle
(86) Numéro de dépôt international: PCT/EP2015/070087
(87) Numéro de publication internationale: WO 2016/034645

(56) Documents cités:
- WO-A2-2011/096781
- US-A1- 2009 116 454
- US-A1- 2014 059 192
- LG ELECTRONICS: "Solution 1 variant for Inter-H(e)NB mobility with L-GW relocation", 3GPP DRAFT; S2-101361_LIPA_SOL1_MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 16 février 2010 (2010-02-16), XP050433881,

## Description

La présente invention concerne un procédé permettant d'améliorer la continuité des communications pour des terminaux mobiles dans un réseau de communication. Elle s'applique notamment aux réseaux TLE (« Long Term Evolution ») pour permettre la continuité d'une session de données et de signalisation d'applications, lors des déplacements de terminaux mobiles d'un site radio vers un autre. L'invention peut être mise en œuvre dans des réseaux susceptibles de connaître des ruptures de liens de communication dans le réseau de communication.

Les réseaux informatiques utilisés par les terminaux mobiles de quatrième génération (4 G) comprennent des sous-réseaux radio, parfois désignés sous le sigle anglo-saxon RAN pour « Radio Access Network », lesquels sont raccordés à un réseau d'interconnexion de données par paquets, appelé aussi PDN abrégé anglo-saxon de Packet Data Network, le PDN pouvant être relié à Internet. Un terminal mobile de quatrième génération est identifié par une adresse IP (Internet Protocol) qui lui permet de recevoir et d'émettre des données à travers l'ensemble du réseau informatique. Le terminal mobile est sous la couverture d'une station antennaire, appelée aussi station de base. Un RAN est formé d'un ensemble de stations de base dont les couvertures se complètent pour couvrir un territoire. Entre le terminal mobile et la station de base, les données sont transmises, par exemple, sous la forme d'ondes radioélectriques puis la station de base transmet les données, généralement via des câbles ou des fibres optiques, à une passerelle faisant interface entre un RAN et un PDN. En règle générale, plusieurs stations de base sont contrôlées par une même station de contrôle. Une telle station de contrôle remplit plusieurs rôles, notamment le filtrage de paquets, la gestion de la qualité de service, l'authentification des utilisateurs, le contrôle des stations de base.

Lorsque le terminal mobile se déplace et sort de la zone couverte par une première station de base sous la couverture de laquelle il était situé, les communications sont assurées par une deuxième station de base dont la couverture est adjacente à la première. Si la deuxième station de base est connectée à la même station de contrôle que la première station de base, on parle de micro-mobilité. Dans le cas où le terminal mobile se déplace vers une deuxième station de base qui est connectée à une station de contrôle différente de la première station de contrôle, le terme de macro-mobilité est employé.

La gestion des sessions de communications permet d'exécuter un protocole de négociation d'appel entre deux utilisateurs visant à s'assurer que ces deux utilisateurs ont les moyens de dialoguer ensemble avant l'établissement d'une communication. Cette gestion peut être effectuée grâce à un protocole fonctionnant sur une architecture client-serveur. Par exemple, le protocole SIP s'appuie sur une coopération entre un module logiciel client installé sur un terminal et un serveur SIP présent dans le CSN.

Le document US 2014/059192 concerne une architecture LTE standard avec un cœur de réseau (MME, S-Gw, P-Gw) unique mais avec des gateway LIPA (L-GW) distribuées, le call-flow mis en œuvre implique donc toujours des éléments centralisés (MME et S-Gw). Le positionnement du message GARP est émis après le handover radio mais avant l'établissement des nouveaux bearers par la gateway de destination.

L'objectif du document US 2009/0116454 est d'éviter l'utilisation du message GARP qui générerait une charge de traitement inutile sur les autres nœuds du réseau.

Le document WO2011096781 concerne la mobilité d'un terminal sans fil. Dans la passerelle locale, une demande de création de session destinée au terminal sans fil est reçue en provenance du nœud de desserte, et cette demande contient une adresse IP dudit terminal sans fil au sein du réseau local. L'adresse IP du terminal sans fil qui a été reçue dans la demande est diffusée sur le réseau local en association avec une adresse de contrôle d'accès au support correspondant à la passerelle locale.

La publication de LG Electronics intitulée « Solution 1 variant for Inter-H(e)NB mobility with L-GW relocation », XP050433881 concerne un procédé qui permet le maintien de la connectivité d'un utilisateur au sein d'un réseau.

L'un des objets de la présente invention est de proposer un procédé pour envoyer de manière optimisée les messages échangés lors d'un transfert cellulaire connu sous l'expression anglo-saxonne « handover standard » LTE, afin de minimiser les développements dans les logiciels de cœur de réseau ou « EPC LTE » (Evolved Packet Core) permettant de connecter l'utilisateur à son réseau de communication mobile, d'impacter le moins possible le protocole standard LTE 3GPP, de fournir des performances optimales de temps d'interruption de trafic.

L'invention concerne un procédé pour optimiser la procédure de transfert ou « handover » d'un terminal mobile T d'un premier site radio vers un deuxième site radio dans un réseau distribué, les sites radio comprenant une première station radio source, une deuxième station radio cible comportant plusieurs entités logiques chaque station radio source comportant plusieurs entités logiques, une entité MME pour la gestion de la mobilité des terminaux, une passerelle de connexion PDN-Gw assurant la connexion d'un terminal utilisateur à un réseau, un module HSS contenant l'information d'un utilisateur et son inscription, un module de contrôle de la qualité de service PCRF, lesdits sites radio étant reliés entre eux au moyen d'un réseau de connexion R, caractérisé en ce qu'un message contenant l'adresse IP d'un terminal mobile et l'adresse MAC du contrôleur des stations de base, GARP, permettant le maintien de la connectivité du terminal mobile T avec le réseau de connexion R lorsque le terminal mobile T change du premier site radio vers le deuxième site radio est transmis par la passerelle du site cible lors de la procédure de « handover » après l'étape d'initialisation d'entrée du terminal mobile dans le réseau et après la procédure de préparation de « handover » annonçant l'arrivée du terminal mobile vers le deuxième site radio, et après la fin des échanges d'information de relocalisation entre la première station radio et la deuxième station radio, et le rétablissement de l'ensemble des connexions logiques entre une passerelle PDN-GW et un terminal et entre toutes lesdites entités logiques de la deuxième station radio et le terminal mobile.

Le réseau de connexion est, par exemple, un réseau de transmission par paquets de données PDN et le message GARP contenant l'adresse IP d'un terminal mobile et l'adresse MAC des stations de base est transmis par la passerelle du site cible après une requête de création « Modify Bearer » de connexion logique entre le réseau d'interconnexion « PDN » et une station radio cible, la station cible comprenant une passerelle de service et une passerelle de connexion, après que la passerelle de service S-Gw de la station radio cible ait créé un contexte et que la passerelle PDN-Gw de la station radio cible ait établi la connexion avec le réseau PDN.

Le procédé peut comporter au moins les étapes suivantes :
- La station radio source initie une procédure de handover du terminal mobile T vers le site radio cible et son entité de gestion de mobilité transmet une requête de demande de transfert à l'entité mobile cible du site radio cible,
- L'entité de gestion de mobilité MME cible transmet une requête de création de session vers la passerelle de service cible du site radio cible,
- La passerelle de service cible transmet une requête de création de session vers la passerelle de connexion cible du site radio cible,
- La passerelle de connexion PDN-Gw cible transmet une réponse de création de session vers la passerelle de service cible, cette dernière envoie une acceptation de création de session,
- L'entité de gestion de mobilité MME cible transmet une requête de « handover » à la station radio cible, qui répond à ce message par un accusé réception,
- L'entité de gestion de mobilité MME cible envoie à l'entité de gestion de mobilité MME source un message de réponse à la requête de « handover » indiquant que la requête a été acceptée,
- Sur réception de la réponse l'entité de gestion de mobilité MME source émet une commande de « handover » via l'interface S1 à la station radio source lui demandant de transférer l'équipement utilisateur mobile T vers la station radio cible,
- La station radio cible informe l'entité de gestion de mobilité cible que l'utilisateur mobile T est relié à elle en transmettant une notification de « handover » via l'interface S1,
- Les entités de gestion de mobilité de la station source et de la station cible s'échangent des messages de fin de relocalisation au moyen de l'interface S10,
- L'entité mobile cible envoie une requête de session « Modify Bearer » au S-GW cible,
- La passerelle S-Gw de la cible envoie une requête de modification de session « Modify Bearer » au PDN-Gw cible,
- Lors de l'étape de handover, la passerelle PDN-Gw du site cible établit la connexion avec le réseau PDN en transmettant le message GARP.

Le réseau sur lequel est mis en œuvre le procédé peut être un réseau de communication LTE 3GPP.

Le réseau de connexion est, par exemple, un réseau IP distribué sur les sites radio.

L'invention concerne aussi un système pour optimiser la procédure de transfert ou « handover » d'un terminal mobile d'un premier site radio source vers un deuxième site radio dans un réseau décentralisé et sur lesquels le terminal mobile T peut être affilié, les sites radio comprenant une station radio source, une station radio cible, chaque station radio source comportant plusieurs entités logiques, une entité MME pour la gestion de la mobilité des terminaux, une passerelle de connexion PDN-Gw assurant la connexion d'un terminal utilisateur à un réseau, un module HSS contenant l'information d'un utilisateur et son inscription, un module de contrôle de la qualité de service PCRF, lesdits sites radios étant reliés entre eux au moyen d'un réseau de connexion R caractérisé en ce qu'il comporte des moyens adaptés à exécuter les étapes du procédé selon l'invention. Le réseau de connexion est, par exemple un réseau Internet distribué.

Le réseau de communication peut être un réseau LTE 3GPP.

D'autres caractéristiques et avantages de la présente invention apparaîtront à la lecture de la description donnée à titre illustratif et non limitatif annexée des figures qui représentent :
- La figure 1, un exemple de réseau 4G sur lequel peut être mis en œuvre le procédé selon l'invention, et
- La figure 2, un diagramme d'échanges de flux lors de la mise en œuvre du procédé selon l'invention.

L'exemple qui suit est donné pour une procédure handover connue sous la dénomination « S1-based handover » qui utilise l'interface S1 entre une station de base et une entité de gestion de la mobilité ou MME, et l'interface S10 entre les entités de gestion de mobilité des différentes stations de base, ces désignations étant connues de l'homme du métier.

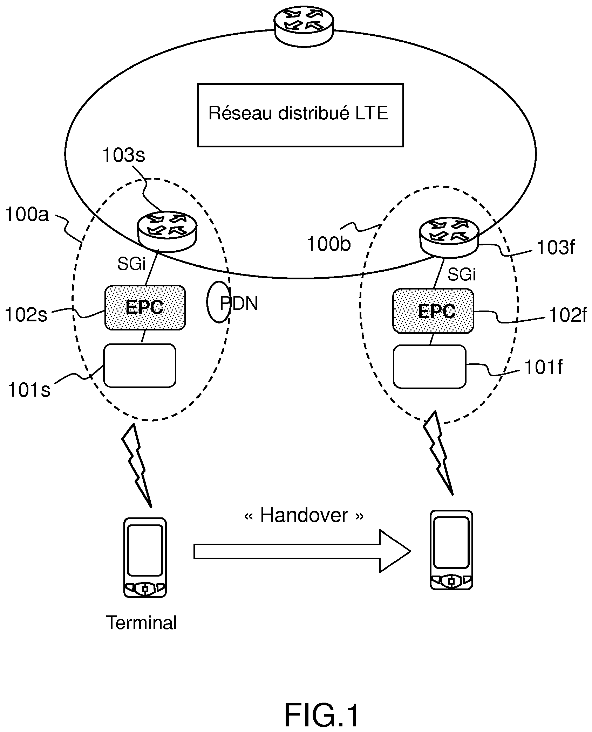

La figure 1 est une vue présentant un exemple de réseau sur lequel le procédé selon l'invention peut être mis en œuvre, le réseau ayant une architecture décentralisée au sens où chaque station radio ou site radio est autonome et connecté à une station de contrôle différente. Un réseau de communications 4G est constitué d'un ensemble de site radio 100a, 100b comprenant chacun une station radio LTE, 101s, 101f, un cœur de réseau LTE (EPC), 102s, 102f, un routeur d'interconnexion 103s, 103f à un réseau informatique ou « backbone IP ». Un terminal mobile T a la capacité d'effectuer une procédure de « handover » entre les sites radio. Les sites radio sont interconnectés grâce à un réseau R de type réseaux publiques de transmission de données ou PDN (Packet Data Network), par exemple, un réseau IP (Internet Protocol) qui est présent sur chacun des sites radios et qui interconnecte aussi les éléments de chaque site entre eux. Le réseau de connexion PDN permet aux terminaux mobiles T de se connecter entre eux et aussi à des services externes. C'est la connexion vers ce PDN que le procédé selon l'invention vise à maintenir durant la procédure de handover d'un terminal mobile T.

Le cœur de réseau LTE d'un site radio comporte par exemple les éléments suivant :
- 111, une passerelle de service S-Gw ou Service Gateway ayant pour fonction de router et transmettre les paquets de données utilisateur à travers les canaux de transmission vers la passerelle PDN-Gw 112,
- 110, une entité de gestion de la mobilité, MME ou «Mobile Management Entity » ayant pour fonction de gérer l'accès au réseau LTE, par exemple, elle affecte un utilisateur à une passerelle de service S-Gw qui convient, elle gère l'établissement des canaux de transmission dans le réseau; elle représente le point d'ancrage de la mobilité, gère les contextes de mobilité, elle est désignée aussi entité de gestion pour des raisons de simplification,
- 112, une passerelle de connexion PDN-Gw ou « PDN Gateway » qui assure la connexion du terminal utilisateur à tout réseau PDN, internet, intranet ou autre, qui est le point d'entrée/sortie de trafic pour l'équipement utilisateur, et d'autres services connus de l'homme du métier ; cette passerelle gère les contextes de connexion,
- 113, Un module HSS ou « Home subscriber Server » correspondant à la base de données centrale des utilisateurs du réseau qui contient l'information d'un utilisateur et de son inscription,
- 114, Un module de contrôle de la qualité de service (QoS) ou « PCRF » (Police and Charging Rule function).

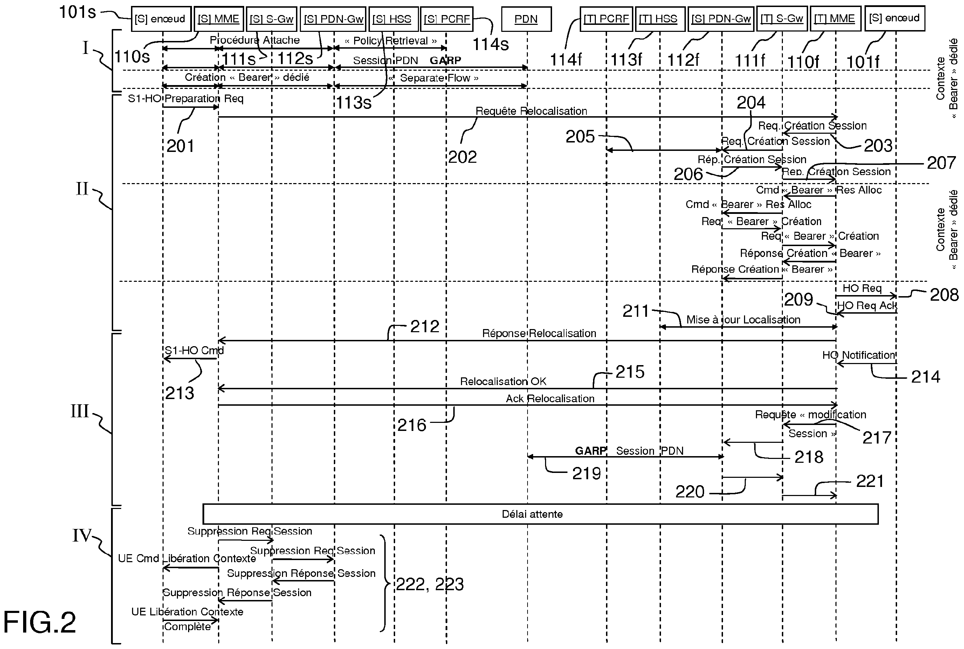

La figure 2 schématise un diagramme de flux du processus de handover selon l'invention dans le cas d'une architecture réseau distribuée.

Le procédé comporte par exemple, quatre phases. La première phase I « d'entrée initiale réseau » connue sous l'expression anglo-saxonne « Initial Network Entry », correspond à l'entrée initiale d'un terminal mobile dans le réseau. Au cours de cette procédure standard du LTE, un message d'annonce GARP (Gratuitous ARP) est envoyé pour annoncer l'arrivée du terminal dans le réseau. Le message GARP comprend notamment l'adresse IP du terminal mobile et l'adresse MAC (Médium Access Control) du contrôleur de stations de base qui permettent de gérer les problèmes de mobilité des terminaux mobiles, la qualité de service QoS et l'authentification des utilisateurs.

La deuxième phase II ou « handover préparation » prépare le « handover » du terminal mobile. Habituellement dans l'art antérieur, le message GARP est positionné au cours de cette deuxième phase pour annoncer l'arrivée du terminal sur le nouveau site radio.

La troisième phase III ou « handover procédure » correspond au « handover » à proprement parlé, au cours de laquelle le terminal mobile bascule d'un premier site radio vers un autre site radio.

La quatrième phase IV ou « cleaning procédure » est une phase où le procédé va supprimer les informations résiduelles sur le premier site radio source une fois que le handover a été effectué et que l'attachement du terminal mobile au deuxième site cible est une réussite.

Le procédé selon l'invention va transmettre le message GARP lors de la troisième phase III, la procédure de « handover » après la fin des échanges relatifs à la relocalisation entre la station radio source et la station radio cible et après le rétablissement des connexions logiques entre les entités logiques de la station radio cible, alors que les méthodes de l'art antérieur transmettent généralement ce message lors de la deuxième phase. Ceci permet avantageusement de réduire au maximum le temps de coupure de la connexion et aussi, permet un retour en arrière propre sans impact sur le réseau PDN en cas d'échec du handover étant donné que l'annonce de l'arrivée du terminal n'est faite qu'une fois que celle-ci a réussi.

La figure 2 représente sous forme d'un diagramme de flux les étapes détaillées mises en œuvre par le procédé selon l'invention lorsqu'un terminal mobile bascule d'un premier site radio source vers un deuxième site radio cible.

La première phase correspondant à la procédure d'entrée dans le réseau d'un terminal mobile T se déroule entre le terminal mobile et le PDN. Ces étapes ne faisant pas partie de l'objet de l'invention ne seront pas détaillés car elles sont connues de l'homme du métier.

Dans l'exemple donné, le premier site radio 101s initie une procédure de handover afin que le terminal mobile T soit attaché à un autre site radio cible 101f, sans interruption de la conversation ou du transfert des données, on entre dans la deuxième phase de préparation au handover. La station radio 101s du premier site radio source transmet 201 une requête S1-HO à l'entité de gestion de mobilité 110s du premier site radio source. Le message de requête contient les identifiants de la station de base (enodeB UE S1 AP ID) et de la station de contrôle (MME UE S1 AP).

L'entité de gestion source MME 110s du premier site source transmet une requête de demande de transfert ou de délocalisation 202 à l'entité de gestion de mobilité 110f du site cible sur lequel le terminal mobile T doit être affilié. Ce message inclut tous les détails qui ont été transmis lorsque l'équipement utilisateur T a été connecté à l'interface du réseau de téléphonie mobile E-UTRAN (Evolved UMTS Terrestrial Radio Access), y compris les informations de connexions, les contextes qui ont été établis pour le terminal mobile.

L'entité de gestion MME cible 110f transmet 203 une requête de création de session vers la passerelle S-Gw 111f du site cible. Ce message comprend tous les contextes de connexion et les sessions « EPS bearer » établies et toutes les informations qui ont été transmises lors de l'attachement initial du terminal au réseau, qualité de service QoS, APN, type de PDN, etc.

La passerelle de service S-Gw 111f cible transmet 204 une requête de création de session vers la passerelle de connexion PDN-Gw cible 112f afin d'établir la connexion au PDN d'une manière identique à celle utilisée lors de la procédure d'initialisation. La passerelle PDN-Gw cible dialogue (en anglo-saxon « Policy Retrieval ») avec le module de contrôle de qualité de service PCRF 205.

La passerelle PDN-Gw cible 101f demande les règles de qualité de service (QoS) au PCRF si nécessaire. Ensuite le PDN-Gw cible 112f transmet une réponse de création de session 206 vers la passerelle de service cible S-Gw 111f indiquant que la session a été créée avec succès.

Si la passerelle cible S-Gw 111f l'accepte, alors elle envoie une réponse de création de session, 207, à l'entité de gestion cible MME 110f du site cible afin d'indiquer que la session a été effectuée avec succès.

L'entité de gestion MME cible 110f transmet ensuite, 208, une requête de handover à la station radio 101f cible. Le message contenu dans cette requête inclut les contextes de connexion « E-RAB » à établir parmi les nouveaux MME UE S11 AP ID, connus du domaine du « handover », avec la nouvelle passerelle S-GW. La station radio cible 101f répond à ce message par un accusé réception Ack, 209, qui comprend les contextes de connexions (ou « bearer ») établis.

Il y a une mise à jour 211, transmise par l'entité de gestion cible MME cible 110f vers la base de données centrale 113f du site radio cible.

A l'étape suivante, 212, l'entité de gestion MME cible 110f envoie à l'entité de gestion MME source 110s un message de réponse à la requête de handover indiquant que la requête a été acceptée. Cette réponse contient aussi les contextes de connexion (bearers) qui ont été admis.

Une fois que la réponse a été reçue par l'entité de gestion MME source 110s, cette dernière transmet une commande de handover, message S1 AP via l'interface S1 à la station radio source lui demandant de « transférer » 213 l'équipement utilisateur mobile T vers la station radio cible 101f. La station radio source transmet ces informations à l'équipement utilisateur mobile T. Les liens de l'équipement utilisateur au niveau de la station radio source sont défaits alors que de nouveaux liens de communication avec la station radio cible sont créés afin de relier l'équipement utilisateur à cette deuxième radio.

La station radio cible informe 214 l'entité de gestion MME cible que l'utilisateur mobile T est relié à elle en transmettant une notification de handover via l'interface S1. Les entités de gestion de mobilité de la station radio source et de la station radio cible s'échangent des messages de fin de relocalisation au moyen de l'interface S10, 215, 216. Le dialogue entre la station source et la station cible est terminé à ce stade de la procédure.

L'entité mobile cible 110f envoie, 217, une requête de modification de session connue sous le terme anglo-saxon « Modify Bearer » au S-Gw cible 111f permettant de re-créer les connexions virtuelles entre station radio et S-Gw/ PDN-Gw de la deuxième radio cible. La passerelle de service S-Gw 112f transmet, 218, aussi une requête à la passerelle PDN-Gw. La passerelle de service et la passerelle de connexion du site répondent à ces deux messages 220, 221.

Avantageusement, selon l'invention, au cours de l'étape qui suit la requête de session « Modify Bearer », la passerelle PDN-Gw du site cible établit la connexion avec le réseau PDN en transmettant le message GARP, 219, et commence à transmettre des paquets selon le nouveau lien descendant. Le message GARP, 219, sera transmis selon l'invention après que l'ensemble des connexions logiques entre un PDN-GW et un terminal mobile soient établies. Ce message GARP permettra notamment la transmission des données, des messages des autres terminaux mobiles à destination du terminal mobile.

Après un délai d'attente, la passerelle S-Gw source 111s efface la requête de session au niveau du PDN-Gw en lui demandant d'effacer toutes les connexions virtuelles « Bearers EPS » entre deux modules, par exemple entre la station cible et une passerelle PDN-Gw pour cet équipement, 222, 223.

Le procédé selon l'invention permet avantageusement d'optimiser les procédures de transfert d'un équipement radio mobile d'une première station de base radio, premier nœud, vers une autre station de base, nœud destinataire, en minimisant le risque de rupture de liens de communication.

## Revendications

1. Procédé pour optimiser la procédure de transfert ou « handover » d'un terminal mobile T d'un premier site radio (100a) vers un deuxième site radio (100b) dans un réseau distribué, le terminal mobile T pouvant s'affilier sur lesdits sites radio, lesdits sites comprenant une première station radio source (101s), une deuxième station radio cible (101f), chaque station radio source comportant plusieurs entités logiques, une entité MME pour la gestion de la mobilité des terminaux, une passerelle de connexion PDN-Gw assurant la connexion d'un terminal utilisateur à un réseau, un module HSS contenant l'information d'un utilisateur et son inscription, un module de contrôle de la qualité de service PCRF, lesdits sites radio étant reliés entre eux au moyen d'un réseau de connexion R, **caractérisé en ce qu'**un message d'annonce "Gratuitous Address Resolution Protocol", GARP contenant l'adresse IP du terminal mobile et l'adresse MAC du contrôleur des stations de base (219) de maintien de connectivité du terminal mobile T avec le réseau de connexion R lorsque le terminal mobile T change du premier site radio (100a) vers le deuxième site radio (100b) est transmis par la passerelle du site cible lors de la procédure de « handover », après l'étape d'initialisation d'entrée du terminal mobile dans le réseau, après la procédure de préparation de « handover » annonçant l'arrivée du terminal mobile vers le deuxième site radio et après la fin des échanges d'information de relocalisation entre la première station radio (101s) et la deuxième station radio cible (101f), et le rétablissement de l'ensemble des connexions logiques entre la passerelle PDN-GW et le terminal et entre toutes lesdites entités logiques de la deuxième station radio cible et le terminal mobile.

2. Procédé selon la revendication 1 **caractérisé en ce que** le réseau de connexion est un réseau de transmission par paquets de données PDN et **en ce que** le message GARP (219) est transmis par la passerelle du site cible après une requête de création « Modify Bearer » de connexion logique entre le réseau d'interconnexion « PDN » et une station radio cible, la station cible comprenant une passerelle de service et une passerelle de connexion après que la passerelle de service S-Gw de la station radio cible (101f) ait créé un contexte et que la passerelle PDN-Gw de la station radio cible (101f) ait établi la connexion avec le réseau PDN.

3. Procédé selon l'une des revendications 1 à 2 comportant au moins les étapes suivantes :
• La station radio source (101s) initie une procédure de handover du terminal mobile T vers le site radio cible (101f) et son entité de gestion de mobilité (110s) transmet une requête de demande de transfert à l'entité mobile cible (110f) du site radio cible,
• L'entité de gestion de mobilité MME cible (110f) transmet (203) une requête de création de session vers la passerelle de service cible (111f) du site radio cible,
• La passerelle de service cible (111f) transmet (204) une requête de création de session vers la passerelle de connexion cible (112f) du site radio cible (101f),
• La passerelle PDN-Gw cible transmet une réponse de création de session (206) vers la passerelle de service cible (111f), cette dernière envoie une acceptation de création de session,
• L'entité de gestion MME cible (110f) transmet (208) une requête de handover à la station radio (101f) cible, qui répond à ce message par un accusé réception, (209)
• L'entité de gestion MME cible (110f) envoie (212) à l'entité de gestion MME source (110s) un message de réponse à la requête de handover indiquant que la requête a été acceptée,
• Sur réception de la réponse l'entité de gestion MME source (110s) émet une commande de handover via l'interface S1 à la station radio source lui demandant de « transférer » (213) l'équipement utilisateur mobile T vers la station radio cible (101f)
• La station radio cible informe (214) l'entité de gestion cible que l'utilisateur mobile T est relié à elle en transmettant une notification de handover via l'interface S1,
• Les entités de gestion de mobilité de la station source (110s) et de la station cible (110f) s'échangent des messages de fin de relocalisation au moyen de l'interface S10, (215, 216),
• L'entité de gestion MME cible (110f) envoie (217) une requête de session « Modify Bearer » au S-GW cible (111f),
• La passerelle S-Gw de la cible envoie (218) une requête de modification de session « Modify Bearer » à la passerelle PDN-Gw cible, **caractérisé en ce que**
• Lors de l'étape de handover, la passerelle PDN-Gw du site cible établit la connexion avec le réseau PDN en transmettant le message GARP (219).

4. Procédé selon l'une des revendications précédentes **caractérisé en ce que** le réseau est un réseau de communication LTE 3GPP.

5. Procédé selon l'une des revendications précédentes **caractérisé en ce que** le réseau de connexion est un réseau IP distribué sur les sites radio.

6. Système pour optimiser la procédure de transfert ou handover d'un terminal mobile d'un premier site radio source (100a) vers un deuxième site radio (100b) dans un réseau décentralisé et sur lesquels le terminal mobile T peut être affilié, lesdits sites radio comprenant une station radio source (101s), une station radio cible (101f), chaque station radio source comportant plusieurs entités logiques, une entité MME pour la gestion de la mobilité des terminaux, une passerelle de connexion PDN-Gw assurant la connexion d'un terminal utilisateur à un réseau, un module HSS contenant l'information d'un utilisateur et son inscription, un module de contrôle de la qualité de service PCRF, lesdits sites radios étant reliés entre eux au moyen d'un réseau de connexion R **caractérisé en ce qu'**il comporte des moyens adaptés à exécuter les étapes du procédé selon l'une des revendications 1 à 5.

7. Système selon la revendication 6 **caractérisé en ce que** le réseau de connexion est un réseau IP distribué.

8. Système selon la revendication 6 **caractérisé en ce que** le réseau de communication est un réseau LTE 3GPP.

## Patentansprüche

1. Verfahren zum Optimieren des Übergabe- oder "Handover"-Verfahrens in einem mobilen Endgerät T von einer ersten Funkstelle (100a) zu einer zweiten Funkstelle (100b) in einem verteilten Netzwerk, wobei sich das mobile Endgerät T an die Funkstellen anschließen kann, wobei die Stellen Folgendes umfassen: eine erste Ausgangsfunkstation (101s), eine zweite Zielfunkstation (101f), wobei jede Ausgangsfunkstation mehrere logische Entitäten umfasst, eine MME-Entität zum Verwalten der Mobilität der Endgeräte, ein Verbindungs-Gateway PDN-Gw, das die Verbindung eines Benutzerendgeräts mit einem Netzwerk gewährleistet, ein HSS-Modul, das die Informationen eines Benutzers und seine Registrierung enthält, ein Modul zum Steuern der Servicequalität PCRF, wobei die Funkstellen durch ein Verbindungsnetzwerk R miteinander verbunden sind, **dadurch gekennzeichnet, dass** eine GARP-(Gratuitous Address Resolution Protocol)-Ankündigungsmeldung, die die IP-Adresse des mobilen Endgeräts und die MAC-Adresse der Basisstationensteuerung (219) zum Aufrechterhalten der Konnektivität des mobilen Endgeräts T mit dem Verbindungsnetzwerk R enthält, wenn das mobile Endgerät T von der ersten Funkstelle (100a) zur zweiten Funkstelle (100b) wechselt, vom Gateway der Zielstelle während des "Handover"-Verfahrens, nach dem Schritt des Initialisierens des Eintritts des mobilen Endgeräts in das Netzwerk, nach dem "Handover"-Vorbereitungsverfahren, das der zweiten Funkstelle die Ankunft des mobilen Endgeräts ankündigt, und nach dem Ende des Austauschs von Relokalisierungsinformationen zwischen der ersten Funkstation (101s) und der zweiten Funkstation (101f) und der Wiederherstellung aller logischen Verbindungen zwischen dem Gateway PDN-GW und dem Endgerät und zwischen allen logischen Entitäten der zweiten Zielfunkstation und dem mobilen Endgerät übertragen wird.

2. Verfahren nach Anspruch 1, **dadurch gekennzeichnet, dass** das Verbindungsnetzwerk ein Übertragungsnetzwerk durch Datenpakete PDN ist, und dadurch, dass die GARP-Meldung (219) vom Gateway der Zielstelle nach einer "Modify Bearer" Erzeugungsanforderung für eine logische Verbindung zwischen dem Verbindungsnetzwerk (PDN) und einer Zielfunkstation übertragen wird, wobei die Zielstation ein Service-Gateway und ein Verbindungs-Gateway umfasst, nachdem das Service-Gateway S-Gw der Zielfunkstation (101f) einen Kontext erzeugt hat und das Gateway PDN-Gw der Zielfunkstation (101f) die Verbindung mit dem PDN-Netzwerk aufgebaut hat.

3. Verfahren nach einem der Ansprüche 1 bis 2, das wenigstens die folgenden Schritte beinhaltet:
• die Ausgangsfunkstation (101s) leitet ein Handover-Verfahren für das mobile Endgerät T an die Zielfunkstation (101f) ein und ihre Mobilitätsmanagemententität (110s) überträgt eine Übergabebedarfsanforderung zur Zielmobilentität (110f) der Zielfunkstelle,
• die MME-Zielmobilitätsmanagemententität (110f) überträgt (203) eine Sitzungserzeugungsanforderung zum Ziel-Service-Gateway (111f) der Zielfunkstelle,
• das Ziel-Service-Gateway (111f) überträgt (204) eine Sitzungserzeugungsanforderung zum Ziel-Verbindungs-Gateway (112f) der Zielfunkstelle (101f),
• das Ziel-Gateway PDN-Gw überträgt eine Sitzungserzeugungsantwort (206) zum Ziel-Service-Gateway (111f), Letztere sendet eine Sitzungserzeugungsannahme,
• die MME-Zielmanagemententität (110f) überträgt (208) eine Handover-Anforderung zur Zielfunkstation (101f), die auf diese Meldung mit einer Empfangsbestätigung (209) antwortet,
• die MME-Zielmanagemententität (110f) sendet (212) eine Antwortmeldung auf die Handover-Anforderung zur MME-Ausgangsmanagemententität (110s), die anzeigt, dass die Anforderung akzeptiert wurde,
• die MME-Ausgangsmanagemententität (110s) sendet bei Empfang der Antwort einen Handover-Befehl über die Schnittstelle S1 zur Ausgangsfunkstation, die verlangt, dass das mobile Benutzergerät T an die Zielfunkstation (101f) "übergeben" (213) wird;
• die Zielfunkstation informiert (214) die Zielmanagemententität durch Übertragen einer Handover-Benachrichtigung über die Schnittstelle S1 zu ihr darüber, dass der Mobilbenutzer T mit ihr verbunden ist,
• die Mobilitätsmanagemententitäten der Ausgangsstation (110s) und der Zielstation (110f) tauschen Relokalisierungsendenachrichten mittels der Schnittstelle S10 aus (215, 216),
• die MME-Zielmanagemententität (110f) sendet (217) eine "Modify Bearer" Sitzungsanforderung zum Ziel-S-Gw (111f),
• das Gateway S-Gw des Ziels sendet (218) eine "Modify Bearer" Sitzungsmodifikationsanforderung zum Ziel-Gateway PDN-Gw, **dadurch gekennzeichnet, dass**
• das Gateway-PDN-Gw der Zielstelle während des Handover-Schrittes die Verbindung mit dem Netzwerk PDN durch Übertragen der GARP-Meldung (219) aufbaut.

4. Verfahren nach einem der vorherigen Ansprüche, **dadurch gekennzeichnet, dass** das Netzwerk ein LTE 3GPP Kommunikationsnetzwerk ist.

5. Verfahren nach einem der vorherigen Ansprüche, **dadurch gekennzeichnet, dass** das Verbindungsnetzwerk ein über die Funkstellen verteiltes IP-Netzwerk ist.

6. System zum Optimieren des Übergabe- oder Handover-Verfahrens eines mobilen Endgeräts einer ersten Ausgangsfunkstelle (100a) zu einer zweiten Funkstelle (100b) in einem dezentralisierten Netzwerk, an das das mobile Endgerät T angeschlossen sein kann, wobei die Funkstellen Folgendes umfassen: eine Ausgangsfunkstation (101s), eine Zielfunkstation (101f), wobei jede Ausgangsfunkstation mehrere logische Entitäten umfasst, eine MME-Entität zum Verwalten der Mobilität der Endgeräte, ein Verbindungs-Gateway PDN-Gw, das die Verbindung eines Benutzerendgeräts mit einem Netzwerk gewährleistet, ein HSS-Modul, das Informationen über einen Benutzer und seine Registrierung enthält, ein Modul zum Steuern der Servicequalität PCRF, wobei die Funkstellen durch ein Verbindungsnetzwerk R mitinander verbunden sind, **dadurch gekennzeichnet, dass** es Mittel zum Ausführen der Schritte des Verfahrens nach einem der Ansprüche 1 bis 5 umfasst.

7. System nach Anspruch 6, **dadurch gekennzeichnet, dass** das Verbindungsnetzwerk ein verteiltes IP-Netzwerk ist.

8. System nach Anspruch 6, **dadurch gekennzeichnet, dass** das Kommunikationsnetzwerk ein LTE 3GPP Netzwerk ist.

## Claims

1. Method for optimising the transfer or "handover" procedure of a mobile terminal T of a first radio site (100a) to a second radio site (100b) in a distributed network, and with which the mobile terminal T can be affiliated, the radio sites comprising a first source radio station (101s), a second target radio station (101f), each source radio station comprising a plurality of logic entities, an MME entity for the management of the mobility of the terminals, a connection gateway PDN-Gw providing the connection of a user terminal to a network, a HSS module containing information of a user and its registration, a PCRF service quality control module, said radio sites being connected to each other by means of a connection network R, **characterized in that** a "Gratuitous Address Resolution Protocol" announcement message, GARP containing the IP address of the mobile terminal and the MAC address of the controller of the base stations (219) for maintenance of the connectivity of the mobile terminal T with the connection network R when the mobile terminal T changes from the first radio site (100a) to the second radio site (100b) is transmitted by the gateway of the target site during the "handover" procedure, after the initialisation step of entry of the mobile terminal in the network, and after the procedure of "handover" preparation announcing the arrival of the mobile terminal at the second radio site, and after the end of the re-localisation information exchanges between the first radio station (101s) and the second target radio station (101f), and re-establishment of all of the logic connections between the gateway PDN-Gw and the terminal and between all the logic entities of the second target radio station and the mobile terminal.

2. Method according to Claim 1, **characterised in that** the connection network is a data packet transmission network PDN and **in that** the GARP message (219) is transmitted by the gateway of the target site after a request "Modify Bearer" for creation of a logic connection between the PDN interconnection network and a target radio station, the target station comprising a service gateway and a connection gateway, after the service gateway S-Gw of the target radio station (101f) has created a context and the gateway PDN-Gw of the target radio station (101f) has established the connection with the PDN network.

3. Method according to one of Claims 1 to 2 comprising at least the following steps:
• The source radio station (101s) initiates a procedure of handover of the mobile terminal T to the target radio site (101f), and its mobility management entity (110s) transmits a request for transfer to the target mobile entity (110f) of the target radio site,
• The target mobility management entity MME (110f) transmits (203) a request for creation of a session to the target service gateway (111f) of the target radio site,
• The target service gateway (111f) transmits (204) a request for creation of the session to the target connection gateway (112f) of the target radio site (101f),
• The target gateway PDN-Gw transmits a response of creation of the session (206) to the target service gateway (111f), and the latter sends an acceptance of creation of the session,
• The target management entity MME (110f) transmits (208) a request for handover to the target radio station (101f), which responds to this message by a notice of receipt (209),
• The target management entity MME (110f) sends (212) the source management entity MME (110s) a message of response to the request for a handover, indicating that the request has been accepted,
• Upon receipt of the response, the source management entity MME (110s) emits a handover command via the interface S1 to the source radio station, asking it to "transfer" (213) the mobile user equipment T to the target radio station (101f),
• The target radio station informs (214) the target management entity that the mobile user T is connected to it, by transmitting a handover notification via the interface S1,
• The mobility management entities of the source station (110s) and the target station (110f) exchange end of re-localisation messages by means of the interface S10 (215, 216),
• The target management entity MME (110f) sends (217) a request for a "Modify Bearer" session to the target S-Gw (111f),
• The gateway S-Gw of the target sends (218) a request for modification of the "Modify Bearer" session to the target gateway PDN-Gw, **characterised in that**
• During the handover step, the gateway PDN-Gw of the target site establishes the connection with the PDN network by transmitting the GARP message (219).

4. Method according to one of the preceding claims, **characterised in that** the network is an LTE 3GPP communication network.

5. Method according to one of the preceding claims, **characterised in that** the connection network is an IP network distributed on the radio sites.

6. System for optimising the transfer or handover procedure of a mobile terminal of a first source radio site (100a) to a second radio site (100b) in a decentralised network, with which the mobile terminal T can be affiliated, the radio sites comprising a source radio station (101s), a target radio station (101f), each source radio station comprising several logic entities, an MME entity for the management of the mobility of the terminals, a connection gateway PDN-Gw providing the connection of a user terminal to a network, a HSS module containing information of a user and its registration, a PCRF service quality control module, said radio sites being connected to each other by means of a connection network R, **characterised in that** it comprises means which are designed to execute the steps of the method according to one of Claims 1 to 5.

7. System according to Claim 6, **characterised in that** the connection network is a distributed IP network.

8. System according to Claim 6, **characterised in that** the communication network is an LTE 3GPP network.
